# EUROPEAN PATENT APPLICATION

(11) **EP 2 892 003 A1**
(43) Date of publication of application: **08.07.2015**
(21) Application number: 14197741.3
(22) Date of filing: 12.12.2014
(51) Int. Cl.: G06F 21/36

(54) **Method and apparatus for input verification**

(30) Priority: 13.12.2013 CN 201310685187
(71) Applicant: Baidu Online Network Technology (Beijing) Co., Ltd, Beijing 100085 (CN)
(72) Inventor: Hou, Jin, Beijing 100085 (CN); Gao, Tingting, Beijing 100085 (CN); Yang, Fan, Beijing 100085 (CN); Yin, Jia, Beijing 100085 (CN)
(74) Representative: Delumeau, François Guy

(57) **Abstract**

Embodiments of the present invention provide a method for input verification, comprising: sending (S301) a first picture corresponding to a first semantics and a second picture corresponding to a second semantics to a client, wherein the first semantics and the second semantics are correlated; receiving (S302) an operation information sent by the client, wherein, said operation information is information obtained by the client from performing operation on a second picture according to an operation instruction, and said operation instruction is triggered by the user based on the first semantics and the second semantics; performing verification (S303) on the operation information based on verification information corresponding to the first picture. The embodiments of the present invention further provide an apparatus for input verification. According to the technical solution provided by the embodiments of the present invention, the security of input verification can be enhanced.

## Description

### FIELD OF THE INVENTION

The present invention relates to the technology of Internet application, and more specifically, to a method and apparatus for input verification.

### BACKGROUND OF THE INVENTION

As more importance has been attached to network information security, more and more verification methods have evolved, wherein input verification is an approach to distinguish whether a user is a computer or a person. Currently, the main representation of the input verification approach is verification code for preventing malicious code decipher, swiping ticket, spamming in a forum, malicious logon attempts, etc.

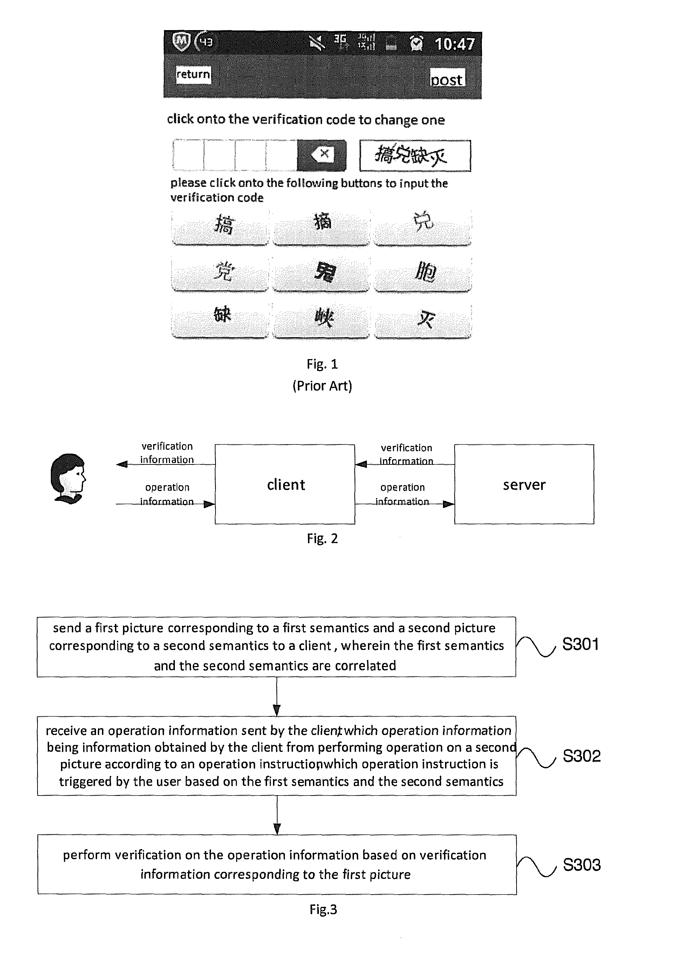

Verification code always performs verification through character information, by displaying a user distorted or scrambled character images, e.g., Sudoku as shown in Fig. 1. The Sudoku verification code includes a Sudoku and a display zone. The Sudoku includes 9 Chinese characters, and each Chinese character can be clicked; the display zone includes 4 Chinese characters; the four Chinese characters displayed in the display zone are clicked in the Sudoku; if all of the four Chinese characters are correctly selected, the input verification is successful; otherwise, the input verification fails.

However, since the Sudoku and the display zone include unanimously Chinese characters, although the shapes, fonts or colors of the Chinese characters in the two areas are different, or interferences such as block exist, as long as they are the same Chinese characters, a corresponding Chinese character can be found through calculating the similarity between pictures. Therefore, the existing Sudoku verification code has a high decipher probability, and the security of input verification is rather low.

### SUMMARY OF THE INVENTION

In view of the above, embodiments of the present invention provide a method and apparatus for input verification so as to improve the security of input verification.

Embodiments of the present invention provide a method for input verification, comprising:
sending a first picture corresponding to a first semantics and a second picture corresponding to a second semantics to a client, wherein the first semantics and the second semantics are correlated;
receiving an operation information sent by the client, wherein, said operation information is information obtained by the client from performing operation on a second picture according to an operation instruction, and said operation instruction is triggered by the user based on the first semantics and the second semantics;
performing verification on the operation information based on verification information corresponding to the first picture.

According to an embodiment of the present invention, before sending a first picture corresponding to a first semantics and a second picture corresponding to a second semantics to a client, the method further comprises:
randomly selecting the second picture from a preset verification database based on an operation behavior at the client;
obtaining a first picture corresponding to the second picture based on the preset correspondence relationship between the second picture and the first picture.

According to an embodiment of the present invention, the performing verification on the operation information based on verification information corresponding to the first picture comprises:
obtaining verification information corresponding to the first picture based on the correspondence relationship between the first picture and the verification information;
comparing the verification information and the operation information, and if the verification information and the operation information are consistent, determining that the input verification is successful.

According to an embodiment of the present invention, the first semantics is a semantics based on a first language information, and the second semantics is a semantics based on a second language information.

According to an embodiment of the present invention, the second picture comprises at least two Chinese characters, and the first picture comprises pinyin of at least one Chinese character among the at least two Chinese characters; or,
the second picture comprises at least two Chinese characters, the first picture comprises an English word for at least one Chinese character among the at least two Chinese characters.

An apparatus for input verification, comprising:
a verification output unit configured to send a first picture corresponding to a first semantics and a second picture corresponding to a second semantics to a client, wherein the first semantics and the second semantics are correlated;
a verification input unit configured to receive an operation information sent by the client, wherein, said operation information is information obtained by the client from performing operation on a second picture according to an operation instruction, and said operation instruction is triggered by the user based on the first semantics and the second semantics;
a verification processing unit configured to perform verification on the operation information based on verification information corresponding to the first picture.

According to an embodiment of the present invention, the apparatus further comprises:
a verification obtaining unit configured to randomly select the second picture from a preset verification database based on an operation behavior at the client; and obtain a first picture corresponding to the second picture based on the preset correspondence relationship between the second picture and the first picture.

According to an embodiment of the present invention, the verification processing unit is specifically configured to:
obtain verification information corresponding to the first picture based on the correspondence relationship between the first picture and the verification information;
compare the verification information and the operation information, and if the verification information and the operation information are consistent, determine that the input verification is successful.

According to an embodiment of the present invention, the first semantics is a semantics based on first language information, and the second semantics is a semantics based on second language information.

According to an embodiment of the present invention, the second picture comprises at least two Chinese characters, and the first picture comprises the phonetic alphabet, i.e. "pinyin", of at least one Chinese character among the at least two Chinese characters; or,
The second picture comprises at least two Chinese characters, the first picture comprises an English word for at least one Chinese character among the at least two Chinese characters.

It is seen from the above technical solution that through the present invention, when viewing the first picture and the second picture, the user does not operate at the second picture based on the first picture, but needs to understand semantics based on the first semantic information in the first picture, then, according to the expressed semantics, performs corresponding operation on the presented second picture, thereby implementing an input verification, which uses the semantic understanding capability unique to human beings, while the current computers can hardly do this. In this way, the present invention can reduce the probability of deciphering a verification code and enhances the security of input verification.

### BRIEF DESCRIPTION OF THE DRAWINGS

In order to better illustrate the technical solution of the embodiments of the present invention, the accompanying drawings that are to be used in the embodiments will be introduced briefly. It is apparent that the accompanying drawings as described hereinafter are only some embodiments of the present invention. To a person of normal skill in the art, without exercise of inventive effort, other drawings may also be obtained based on these drawings.
Fig. 1 shows a schematic diagram of a Sokodu verification code in the prior art;
Fig. 2 shows a structural diagram of a system applicable to the embodiments of the present invention;
Fig. 3 shows a flow diagram of a method for input verification according to the embodiments of the present invention;
Fig. 4 shows a schematic diagram of a Sokodu verification code according to the embodiments of the present invention;
Fig. 5 shows a structural diagram of an apparatus for input verification according to the present invention.

### DETAILED DESCRIPTION OF THE PREFERRED EMBODIMENTS

In order to better understand the technical solution of the present invention, the embodiments of the present invention will be described in detail with reference to the accompanying drawings.

It should be clear that the embodiments as described here are only a part of embodiments of the present invention, not all embodiments. Based on the embodiments in the present invention, all other embodiments obtained by a person of normal skill in the art without exercise of inventive effort belong to the scope of the present invention.

The system employed in the technical solution according to the embodiments of the present invention is shown in Fig. 2, mainly comprising a client and a server. The method and apparatus according to the embodiments of the present invention are implemented at a server side, mainly used for sending, to the client, relevant pictures needed for verification, such that the client displays these pictures, and the server obtains the operation information sent by the client to perform input verification using the operating information. The embodiments of the present invention do not make any change to the functions of the client, i.e., the client displays the pictures from the server to the user, obtains an operation instruction triggered by the user, and sends the operation information obtained according to the operation instruction to the server, wherein the client may be a browser, which browser includes all browsers running on a user equipment, which user equipment may include a personal computer PC, a laptop, a mobile phone, or a tablet computer.

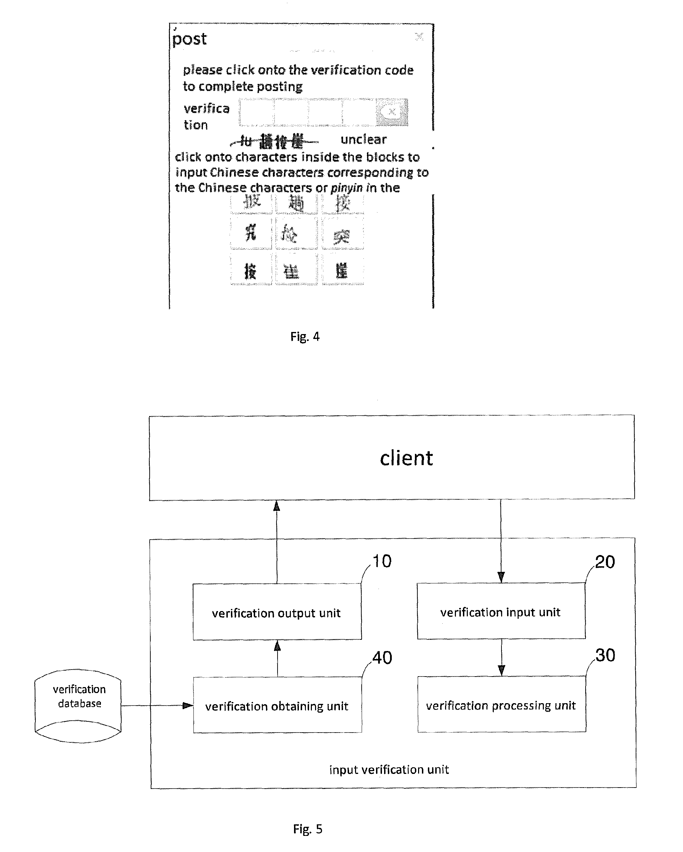

The embodiments of the present invention provide a method for input verification. Please refer to Fig. 3, in which a flow diagram of a method for input verification according to the embodiments of the present invention is presented. As shown in the figure, the method comprises:
S301: send a first picture corresponding to a first semantics and a second picture corresponding to a second semantics to a client, wherein the first semantics and the second semantics are correlated.
   Specifically, a trigger condition for input verification varies with application scenarios. For example, for input verification at logon, when providing the user a logon page, the client also needs to provide verification information and displays the verification information on the logon page; only when the user successfully inputs the logon information and the input verification is successful, can the logon succeed. For another example, in the case of input verification for downloading a resource, the user clicks onto the download link, and when providing the download resource to the user, the client needs to provide verification information to the user, and only when the user's input verification succeeds, will it provide the download resource to the user. Further application scenarios will not be detailed one by one. In the embodiments of the present invention, no specific limitation is imposed to the specific application scenarios. In other words, the trigger condition for the input verification will not be limited. It is assumed in the present embodiment that the trigger condition for the input verification has already been satisfied.
   A verification database pre-stores a first picture, a second picture, and verification information, and stores a one-to-one correspondence relationship between the first picture and the second picture, and a one-to-one correspondence relationship between the first picture and the verification information. After the above operation behavior of the client occurs, the server obtains a need to perform input verification based on the operation behavior of the client, and needs to provide verification information to the user; therefore, the server may randomly select a second picture from the verification database; for example, the second picture selected from the verification database may be a Sokodu picture shown in Fig. 3.
   With the Sokodu verification code as an example, it is necessary to display the Sokodu picture and the verification cod picture to the user. The Sokodu picture includes 9 Chinese characters that can be clicked, while the verification code picture includes four Chinese characters. The user performs clicking in the Sokodu picture based on the four Chinese characters in the verification code picture, to select Chinese characters in the Sokodu picture which are consistent with the verification code picture so as to pass the input verification. In other words, the sokodu picture is a candidate picture, while the verification code picture is a target picture; the user needs to click onto the Chinese characters in the target picture based on the candidate picture and the target picture so as to input the verification code. Therefore, in the embodiments of the present invention, the second picture refers to the above candidate picture, i.e., the sokodu picture as shown in Fig. 4; here, the verification database stores mass second pictures. When the client needs to provide the user the verification information, the server will randomly select a second picture from the verification database.
   After selecting a second picture from a verification database, the server, based on one-to-one correspondence relationships between the first pictures and the second pictures stored in the verification database, and obtains a first picture corresponding to the selected second picture, verification information corresponding to the first picture; the server buffers locally the obtained first picture, second picture, and the one-to-one correspondence relationship therebetween; meanwhile buffers locally the correspondence relationship between the first picture and the client, in which correspondence relationship, the first pictures corresponding to respective clients may be sorted in time sequence, such that it may be determined which first pictures and second pictures are sent to the client; meanwhile, because the server knows occurrence of an operational behavior at the client, the server will send the obtained first picture and second picture to the client, such that the client, after receiving the first picture and the second picture, displays the first picture and second picture to the user.
   In the embodiments of the present invention, the first picture corresponds to a first semantics, which first semantics may be a semantics based on first language information; the second picture corresponds to the second semantics, which second semantics may be a semantics based on second language information, which first semantics is correlated to the second semantics. The first language information may be a language type or language identification, and the second language information may be language type; the language identification may be pinyin. For example, the first language information is language identification, e.g., pinyin; the second language information is language type, e.g., Chinese; then, the second picture includes at least two Chinese characters, and the first picture comprises pinyin of at least one Chinese character among the at least two Chinese characters. For another example, the first language information is a language type, e.g., English, and the second language information is a language type, e.g., Chinese; then the second picture includes at least two Chinese characters, and the first picture includes an English word for at least one Chinese character among the at least two Chinese characters.
   For another example, as shown in Fig. 4, the first semantics corresponding to the first picture is pinyin-based semantics, e.g., the first picture includes "tu," 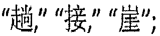 the second semantics corresponding to the second picture is Chinese-based semantics, e.g., the second picture includes 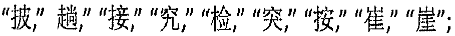 wherein the pinyin "tu" in the first picture is associated with 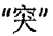 in the second picture, namely, the pinyin for 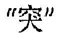 is "tu."
S302: receive an operation information sent by the client, wherein, said operation information is information obtained by the client from performing operation on a second picture according to an operation instruction, and said operation instruction is triggered by the user based on the first semantics and the second semantics.
   Specifically, after the server sends a first picture and a second picture to the client, the client displays the obtained first picture and second picture to the user; in this way, after viewing the first picture and the second picture, the user may operate on the second picture based on the first semantics corresponding to the first picture and the second semantics corresponding to the second picture, so as to send an operation instruction to the client, and the client, based on the user's operation instruction, performs operation on the second picture to obtain the operation information. For example, the client obtains, based on the user's click location on the Sokodu picture, a corresponding Chinese character at the location, which Chinese character is just operation information obtained by the client.
   The client sends the obtained operation information to the server, such that the server receives the operation information sent by the client.
S303: perform verification on the operation information based on verification information corresponding to the first picture

Specifically, interaction between a server and a client needs employment of an enciphered character string, which character string comprises a client identification; when sending operation information to the server, the client may also send the enciphered character string along; in this way, the server may determine that the client is legal based on the enciphered character string.

After obtaining the operation information sent by the client, the server may determine, based on the client identification in the enciphered character string, a first picture nearest to the current time among the first picture(s) sent to the client in the locally buffered correspondence relationship between the first picture and the client and then the server obtains the verification information corresponding to the first picture nearest to the current time based on the locally buffered first picture, second picture, and verification information, as well as their one-to-one correspondence relationships.

The server performs verification of the operation information based on the obtained verification information corresponding to the first picture. In other words, the server compares the verification information and the received operation information; if the verification information is consistent with the operation information, the server determines that the present input verification is successful; otherwise, if the verification information is inconsistent with the operation information, the server determines that the present input verification fails.

For example, as shown in Fig. 4, the user may click onto 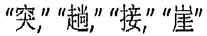 in the Sokodu picture based on the semantic information including "tu," 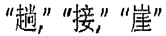 and the semantic information corresponding to the Sokodu picture; the client, based on the user's click operations, obtains the operation information, wherein, said operation information includes 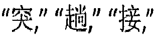 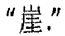 The client sends the operation information to the server. The server obtains the corresponding verification information (i.e., 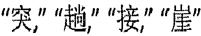 ) based on the first picture, and compares the verification information and the received operation information; if the verification information is found consistent with the operation information, the server determines that the input verification succeeds.

It should be noted that the characters in the first picture in the embodiments of the present invention may still be deformed or scrambled characters.

In the embodiments of the present invention, in order to solve the deficiency of verification code (e.g., Sokodu verification code) in the prior art, a part of a to-be-displayed candidate picture and a target picture is reserved for Chinese character -to - Chinese character mapping, while the remaining part is Chinese character -to- pinyin mapping or Chinese character -to- English word mapping. For example, as shown in Fig. 4, in the prior art, the first picture comprises four Chinese characters, i.e., 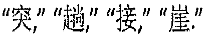 In the embodiment of the present invention, besides font deformation and scrambling of the Chinese characters and pinyin in the first picture, the first picture further includes a part of Chinese characters and the other part of pinyin, i.e., "tu," 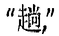 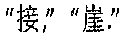 In this way, a successful verification needs to simultaneously click onto the corresponding Chinese characters in the first picture and the Chinese characters corresponding to pinyin in the first picture; the verification information of the first picture stored in the memory is 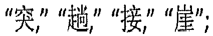 therefore, by comparing the operation information and the verification information, the operation information can be verified. Because this embodiment of the present invention has a mapping between the first semantic information and the second semantic

information, e.g., mapping between pinyin and Chinese characters, only the user understands can a input verification succeed; further, the approach of finding a corresponding character by calculating the similarity between picture would be impossible to decipher the verification information provided by the embodiments of the present invention. Therefore, the technical solution as provided in the embodiments of the present invention can lower the probability of deciphering the verification code, thereby enhancing the security of input verification.

The embodiments of the present invention further provide an apparatus embodiment of implementing various steps and the method in the above method embodiment.

Refer to Fig. 5, in which a structural diagram of an apparatus for input verification according to the embodiments of the present invention is presented. As shown in the figure, the apparatus may be the above server. The apparatus comprises:
a verification output unit 10 configured to send a first picture corresponding to a first semantics and a second picture corresponding to a second semantics to a client, wherein the first semantics and the second semantics are correlated;
a verification input unit 20 configured to receive an operation information sent by the client, wherein, said operation information is information obtained by the client from performing operation on a second picture according to an operation instruction, operation instruction is triggered by the user based on the first semantics and the second semantics;
a verification processing unit 30 configured to perform verification on the operation information based on verification information corresponding to the first picture.

Herein, the apparatus further comprises:
a verification obtaining unit 40 configured to randomly select the second picture from a preset verification database based on an operation behavior at the client; and obtain a first picture corresponding to the second picture based on the preset correspondence relationship between the second picture and the first picture.

Herein, the verification processing unit 30 is specifically configured to:
obtain verification information corresponding to the first picture based on the correspondence relationship between the first picture and the verification information;
compare the verification information and the operation information, and if the verification information and the operation information are consistent, determine that the input verification is successful.

Herein, the first semantics is a semantics based on first language information, and the second semantics is a semantics based on second language information.

Herein, the second picture comprises at least two Chinese characters, and the first picture comprises the phonetic alphabet, i.e. pinyin, of at least one Chinese character among the at least two Chinese characters; or, the second picture comprises at least two Chinese characters, the first picture comprises an English word for at least one Chinese character among the at least two Chinese characters.

It is seen from the above description that the method and apparatus provided by the embodiments of the present invention have the following advantages:
1. In the embodiment of the present invention, when viewing the first picture and the second picture, the user does not operate at the second picture based on the first picture, but needs to understand semantics based on the first semantic information in the first picture, then, according to the expressed semantics, performs corresponding operation on the presented second picture, thereby implementing an input verification, which uses the semantic understanding capability unique to human beings, while the current computers can hardly do this. In this way, the present invention can reduce the probability of deciphering a verification code and enhances the security of input verification.
2. the user does not bother to input the characters one by one; instead, input of the verification code can be completed by perform simple operation on the displayed picture; for the user, the operation becomes simpler and more convenient, which alleviates the user's operation burden, and is therefore particularly suitable for a mobile user.

In the technical solution provided by the present invention, it should be understood that the disclosed system, apparatus, and method may be implemented through other manners. For example, the apparatus embodiment as described above is only schematic, e.g., partitioning of the units is only a logical function partitioning; upon actual implementation, there may be other partitioning manners.

Units that are depicted as separate parts may be, or might not be, physically separated; the components displayed as units may be, or might not be, physical units, i.e., they may be located at one place, or distributed on a plurality of network units; a part or all of the units may be selected based on the actual needs to implement the objective of the solution of the present embodiment.

Further, various functional units in various embodiments of the present invention may be integrated into a processing unit; or various units may be physically present separately; or two or more units may be integrated into one unit. The above integrated units may be implemented in hardware, or in hardware plus software functional units.

The integrated unit implemented in the form of software function unit may be stored in a computer readable memory medium. The above software function unit is stored in a memory medium, including a plurality of instructions for enabling a set of computer device (which may be a personal computer, a server, or a network device, etc.) or a processor to perform a part of steps of the method according to various embodiments of the present invention. The abovementioned memory medium includes, USB (Universal Serial Bus) flash driver, a mobile hard disk, a read only memory (ROM), a random access memory (RAM), a magnetic disk or an optical disk, and other mediums that may store program code.

What have been described above are only preferred embodiments of the present invention, not intended to limit the present invention. Any modification, equivalent substitution, improvement and the like made within the spirit and principle of the present invention should be included within the protection scope of the present invention.

## Claims

1. A method for input verification, comprising:
sending (S301) a first picture corresponding to a first semantics and a second picture corresponding to a second semantics to a client, wherein the first semantics and the second semantics are correlated;
receiving (S302) an operation information sent by the client, wherein, said operation information information obtained by the client from performing operation on a second picture according to an operation instruction, and said operation instruction is triggered by the user based on the first semantics and the second semantics;
performing verification (S303) on the operation information based on verification information corresponding to the first picture.

2. The method according to claim 1, **characterized in that**, before sending a first picture corresponding to a first semantics and a second picture corresponding to a second semantics to a client, the method further comprises:
randomly selecting the second picture from a preset verification database based on an operation behavior at the client;
obtaining a first picture corresponding to the second picture based on the preset correspondence relationship between the second picture and the first picture.

3. The method according to claim 1, **characterized in that** the performing verification on the operation information based on verification information corresponding to the first picture comprises:
obtaining verification information corresponding to the first picture based on the correspondence relationship between the first picture and the verification information;
comparing the verification information and the operation information, and if the verification information and the operation information are consistent, determining that the input verification is successful.

4. The method according to claim 1, **characterized in that**:
the first semantics is a semantics based on first language information, and the second semantics is a semantics based on second language information.

5. The method according to claim 4, **characterized in that**,
the second picture comprises at least two Chinese characters, and the first picture comprises pinyin of at least one Chinese character among the at least two Chinese characters; or,
the second picture comprises at least two Chinese characters, the first picture comprises an English word for at least one Chinese character among the at least two Chinese characters.

6. An apparatus for input verification, comprising:
a verification output unit (10) configured to send a first picture corresponding to a first semantics and a second picture corresponding to a second semantics to a client, wherein the first semantics and the second semantics are correlated;
a verification input unit (20) configured to receive an operation information sent by the client, wherein, said operation information is information obtained by the client from performing operation on a second picture according to an operation instruction, and said operation instruction is triggered by the user based on the first semantics and the second semantics;
a verification processing unit (30) configured to perform verification on the operation information based on verification information corresponding to the first picture.

7. The apparatus according to claim 6, further comprising:
a verification obtaining unit (40) configured to randomly select the second picture from a preset verification database based on an operation behavior at the client; and obtain a first picture corresponding to the second picture based on the preset correspondence relationship between the second picture and the first picture.

8. The apparatus according to claim 6, **characterized in that** the verification processing unit is specifically configured to:
obtain verification information corresponding to the first picture based on the correspondence relationship between the first picture and the verification information;
compare the verification information and the operation information, and if the verification information and the operation information are consistent, determine that the input verification is successful.

9. The apparatus according to claim 6, **characterized in that**,
the first semantics is a semantics based on first language information, and the second semantics is a semantics based on second language information.

10. The apparatus according to claim 9, **characterized in that**,
the second picture comprises at least two Chinese characters, and the first picture comprises pinyin of at least one Chinese character among the at least two Chinese characters; or,
the second picture comprises at least two Chinese characters, the first picture comprises an English word for at least one Chinese character among the at least two Chinese characters.

11. A computer readable storage media, which comprises computer codes, when the computer codes are executed, the method of anyone of claims 1 to 5 is performed.

12. A computer software product, when the computer software product is executed by a computer device, the method of anyone of claims 1 to 5 is performed.

13. A computer device, which comprises a storage and a processor, the storage stores computer codes, and the processor is configured to execute the computer codes so as to perform the method of anyone of claims 1 to 5 is performed.
